# EUROPÄISCHE PATENTANMELDUNG

(11) **EP 0 822 357 A1**
(43) Veröffentlichungstag der Anmeldung: **04.02.1998**
(21) Anmeldenummer: 97112703.0
(22) Anmeldetag: 24.07.1997
(51) Int. Cl.: F16J 15/10

(54) **Dichtung mit Verstärkungsschicht**

(30) Priorität: 31.07.1996 DE 19630973
(71) Anmelder: W.L. GORE & ASSOCIATES GmbH, 85636 Putzbrunn (DE)
(72) Erfinder: Burmann, Gerhard, 91174 Spalt (DE); Rüsch, Hans-Jörg, 85521 Ottobrunn (DE)
(74) Vertreter: Harrison, Robert John

(57) **Zusammenfassung**

Es wird ein Dichtungsmaterial (10) aus einer ersten Schicht (20) und einer mindestens auf einem Teil der Oberfläche der ersten Schicht (20) befestigten zweiten Schicht (30), wobei die zweite Schicht (30) aus einem Material besteht, das wesentlich kratzfester ist als die erste Schicht (20), beschrieben. Die erste Schicht (20) des Dichtungsmaterials (10) ist mittels eines Klebestreifens (40) an der zweiten Schicht (30) befestigt. Sowohl die erste Schicht (20) als auch die zweite Schicht (30) des Dichtungsmaterials bestehen bevorzugt aus expandiertem PTFE, wobei die erste Schicht eine Dichte von 0,5 g/cm³ aufweist.

Das erfindungsgemäße Dichtungsmaterial (10) eignet sich insbesondere zum Herumlegen um die Kante einer Schulter (75) derart, daß keine Flüssigkeit durch die Lücke zwischen der Schulter (75) und der Bodenplatte (60) dringen kann. Vor allem eignet sich das Dichtungsmaterial (10) zum Abdichten des Passagierraums (90) eines Flugzeugs vom Unterbodenbereich des Flugzeugs (95).

## Beschreibung

Die Erfindung betrifft ein Dichtungsmaterial bzw. eine Dichtung aus einer ersten Schicht und einer mindestens auf einem Teil auf der Oberfläche der ersten Schicht befestigten zweiten Schicht.

Dichtungen dieses Typs sind beispielsweise aus der am 31. Oktober 1994 eingereichten US-Patentanmeldung 08/331,835 der W.L.Gore & Associates Inc. bekannt. Die dort beschriebenen Dichtungen bestehen aus einer ersten Schicht aus zusammendrückbarem Material und einer zweiten Schicht aus starrem Material, das so ausgebildet ist, daß man eine einfacher zu handhabende, starre Dichtung erhält, wobei aber die Dichtungseigenschaften erhalten bleiben, für die die unter dem Warenzeichen GORE-TEX® von W.L.Gore & Associates vertriebenen Dichtungen bekannt sind.

W.L. Gore & Associates vertreiben unter dem Warenzeichen SKYFLEX® auch Dichtstoffe zur Verwendung in der Flugzeugindustrie, die in der deutschen Offenlegungsschrift DE-A-37 26 853 ausführlicher beschrieben sind. Derartige Dichtungen weisen jedoch den Nachteil auf, daß sie an der Oberfläche der Dichtstoffe leicht durch scharfe Gegenstände, beispielsweise der Kante einer Metallklammer, beschädigt werden können.

Es gibt nun aber Fälle, bei denen die Dichtungsmasse zwangsläufig mit scharfen Kanten in Berührung kommen muß. Beispielsweise könnte es notwendig sein, Klammern über die Dichtungsmasse zu schieben, oder die Dichtungsmasse könnte unvermeidlich mit anderen scharfen Kanten wie der Kante einer Metallschiene in Berührung kommen. Wenn die Dichtungsmasse beschädigt ist, kann die scharfe Kante die Oberfläche des Gegenstands, auf dem die Dichtungsmasse aufgebracht ist, verkratzen. Dadurch können Lack, Grundierung und Anodisierungsschicht oder ein ähnlicher Oberflächenschutz verlorengehen, so daß die Oberfläche in hohem Maße korrosionsempfindlich wird. Bestehen die Oberfläche des Gegenstands und die Klammer aus unterschiedlichen Metallen, so kann es außerdem aufgrund der Potentialdifferenz zwischen den beiden Metallen zur sogenannten "Batteriekorrosion" kommen.

Zur Lösung dieses Problems wird ein Dichtungsmaterial vorgeschlagen, bei der die zweite Schicht des Dichtungsmaterials aus einem wesentlich kratzfesteren Material besteht als die erste Schicht.

Diese Lösung weist den Vorteil auf, daß die erste Schicht die für die Dichtung erforderlichen Kompressibilitätseigenschaften bewahrt. Die zweite Schicht bietet dabei eine kratzfeste Schicht zum Schutz der zusammendrückbaren Schicht vor Beschädigung durch scharfe Gegenstände.

Die besten Ergebnisse erhält man nach experimentellen Befunden, wenn die zweite Schicht des Dichtungsmaterials eine um mindestens 20% höhere Dichte aufweist als die erste Schicht. Außerdem wurde gefunden, daß die Dichte des Materials mit der Kratzfestigkeit des Materials zusammenhängt.

Die erste Schicht besteht aus Polymeren, die aus der Gruppe der Materialien bestehend aus Polytetrafluorethylen (PTFE), Polyurethan und durch Phasentrennverfahren hergestellten Schäumen ausgewählt sind. Die erste Schicht besteht bevorzugt aus expandiertem PTFE (ePTFE). Die zweite Schicht besteht aus der Gruppe der reißfesten Materialien bestehend aus PTFE, expandiertem PTFE, Kevlar und Polyurethan. Die zweite Schicht besteht bevorzugt aus expandiertem PTFE. Die Verwendung von ePTFE ist besonders vorteilhaft, da es hochbeständig gegenüber Alterung und Angriff durch chemische Korrosion ist. Ferner ist das Material höchst flexibel und paßt sich leicht der Dichtfläche an. Es kann daher um Vorsprünge und Schultern herumgebogen werden, ohne dabei Falten zu werfen.

Das erfindungsgemäße Dichtungsmaterial findet bei Flugzeugen zur Abdichtung des Passagierraums vom Unterbodenbereich Anwendung.

Fig. 1 zeigt das erfindungsgemäße Dichtungsmaterial.

Fig. 2 zeigt ein Beispiel für eine Anwendung des erfindungsgemäßen Dichtungsmaterials.

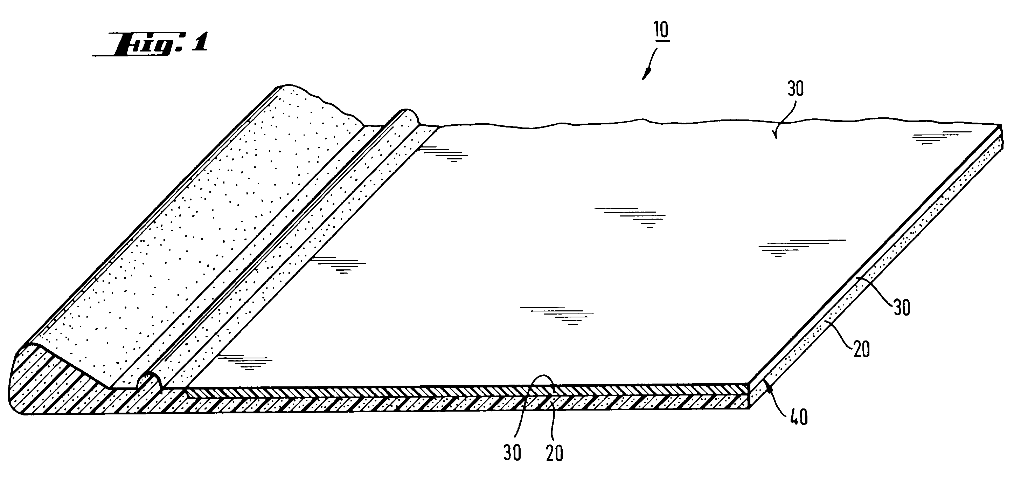

Fig. 1 zeigt eine Ausführungsform des erfindungsgemäßen Dichtungsmaterials. Die Abmessungen und die Form, die in der Zeichnung dargestellt sind, dienen nur zur Veranschaulichung eines Verwendungszwecks des erfindungsgemäßen Dichtungsmaterials und sind nicht als einschränkend zu verstehen. Ein Dichtungsmaterial 10 besteht aus einer ersten Schicht 20, die an die Form der abzudichtenden Werkstücke angepaßt ist, und einer zweiten Schicht 30, die in diesem Fall an einem Teil der Oberseite der ersten Schicht 20 befestigt ist. Die zweite Schicht 30 könnte aber auch an der Unterseite der ersten Schicht 20 oder an beiden Seiten der ersten Schicht 20 befestigt sein, ohne die Wirkungsweise der Erfindung zu verändern.

Die erste Schicht 20 ist unter Materialien mit guten Dichtungseigenschaften ausgewählt. Sie sollte stark zusammendrückbar sein. Als Materialien für diese Schicht eignen sich u.a. Polymere, wie z.B. Polytetrafluorethylen (PTFE) und expandiertes Polytetrafluorethylen (ePTFE), die sich als unbedenkliche und hochwirksame Dichtstoffe erwiesen haben. Es könnten jedoch im Rahmen der vorliegenden Erfindung auch andere Dichtstoffe verwendet werden. Als Beispiele für derartige Materialien seien die durch Phasentrennverfahren hergestellten, wie z.B. Polycarbonate, Polyvinylidenfluorid, Polypropylen, Polysulfon, Nylon, Celluloseacetate und thermoplastische Polyurethane, genannt.

Bei bestimmten Anwendungen, wie z.B. in der Luft- und Raumfahrtindustrie, benötigt man Dichtungsmaterialien, die weich sind, sich leicht an die Abmessungen des abzudichtenden Gegenstands anpassen, gegen Abbau durch Alterung beständig sind und gegenüber dem Angriff von Chemikalien, wie z.B. Kerosin, aggressiven Säuren oder Ölen, in hohem Maße beständig sind. Für diese Zwecke erwies sich ePTFE als besonders gut geeignet. Außerdem empfiehlt sich ePTFE aufgrund des Temperaturbereichs, dem das Dichtungsmaterial 10 ausgesetzt ist (-200°C bis +260°C). Ferner lassen sich Dichtungsbänder aus ePTFE leicht übereinanderlegen, so daß an den Verbindungsstellen der einzelnen ePTFE-Bänder keine Spalten entstehen.

Die besten Kompressibilitätseigenschaften ergeben sich nach experimentellen Befunden bei einer ePTFE-Dichte von 0,5 g/cm³. Expandiertes PTFE mit derartigen Eigenschaften ist von W.L.Gore & Associates erhältlich.

Die zweite Schicht 30 dient zum Schutz der ersten Schicht 20 vor mechanischer Beschädigung. Sie muß daher gegenüber mechanischer Beschädigung möglichst beständig sein. Als Materialien für die zweite Schicht 30 eignen sich u.a. Folien aus PTFE, ePTFE, Kevlar oder Polyurethan. Die zweite Schicht 30 sollte zweckmäßig außerdem noch zusätzliches Dichtungsvermögen aufweisen, d.h. zumindest geringfügig zusammendrückbar sein, so daß sie sich in ihrer Form an die spezielle Anwendung anpassen kann. Als ein besonders gut zur Verwendung geeignetes Material erwies sich ePTFE mit einer Dichte von 0,8 g/cm³ bis 2,0 g/cm³. Derartiges Material wird unter dem Handelsnamen GORE-TEX® von W.L.Gore & Associates vertrieben. Ein weiterer Vorteil dieses Materials besteht darin, daß es chemisch hochbeständig ist und, wie oben schon ausgeführt, über einen großen Temperaturbereich äußerst stabil bleibt.

Die erste Schicht 20 und die zweite Schicht 30 müssen aneinander befestigt werden. Dies kann durch Verschweißen der beiden Schichten geschehen. In den bevorzugten Ausführungsformen klebt man die Schichten mittels eines Klebebands 40 zusammen. So kann man die erste Schicht 20 und die zweite Schicht 30 beim Anbringen der Dichtungsmasse in der gewünschten Anwendung leicht in die gewünschte Position bringen. Ein Beispiel für ein geeignetes Klebeband wird von der 3M Corp. hergestellt und unter der Bezeichnung Scotch™ 927 vertrieben. Dieses Klebeband besteht zu 55%-70% aus einem Acrylpolymer-Klebstoff (CAS-Nr. 9017-68-9), zu 30-40% aus Harz (CAS-Nr. 65997-13-9) und zu 1-4% aus Glasfaser (CAS-Nr. 65997-17-3). Als weitere Beispiele für Klebebänder sei mit einem Klebstoffpolymer, wie z.B. fluoriertem Ethylenpropylen (FEP) oder Perfluoralkoxypolymer (PFA), gesättigtes ePTFE genannt. Außerdem kommen auch Klebstoffe auf Kautschukbasis in Betracht. Alternativ dazu kann man die erste Schicht 20 und die zweite Schicht 30 nach einem Schmelzklebeverfahren aneinander befestigen, bei dem man eine der Schichten mit Schmelzkleber (im allgemeinen auf Kautschukbasis) beschichtet. Nach dem Abkühlen ist der Kleber klebrig, und man kann die andere Schicht auf die Oberfläche der mit Kleber bedeckten Schicht aufbringen.

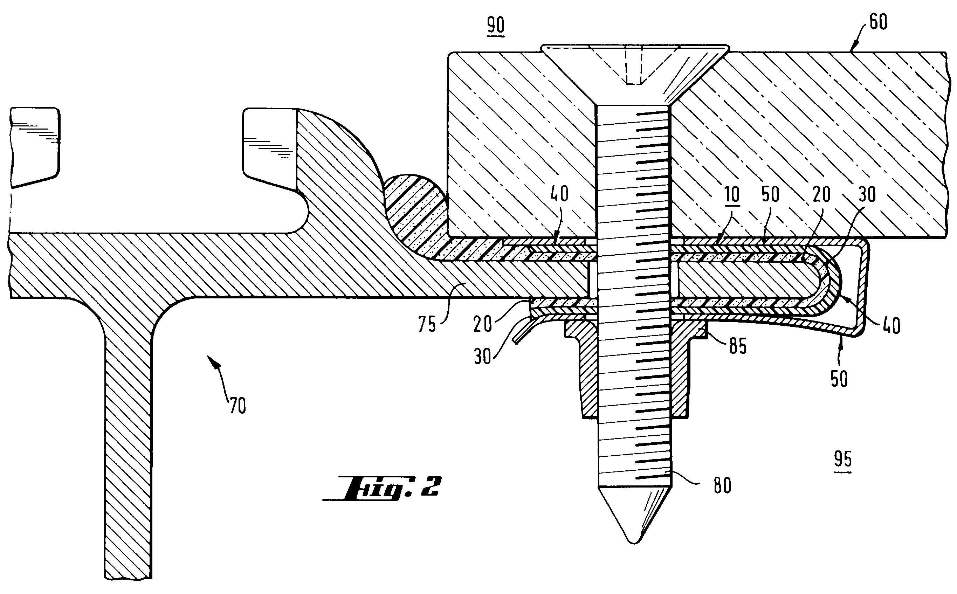

Fig. 2 zeigt eine Anwendung des erfindungsgemäßen Dichtungsmaterials. Im Passagierraum eines Flugzeugs sind die Sitze auf einer Sitzschiene 70 angebracht, die an den nicht gezeigten Spanten des Flugzeugs befestigt ist. Die Sitzschiene 70 besitzt eine Schulter 75, auf der sich eine Bodenplatte 60 des Flugzeugs befindet. Die Bodenplatte 60 ist mittels einer Schraube 80 und einer Mutter 85, die durch Löcher in einer Klammer 50 hindurchgehen, an der Schulter befestigt. Es ist wichtig, daß der Kabinenbereich 90 des Flugzeugs, der im oberen Teil der Figur liegt, von dem unter der Bodenplatte 60 gelegenen Unterbodenbereich 95 abgedichtet ist. Im Kabinenbereich werden den Passagieren nämlich Speisen und Getränke serviert. Es ist wichtig, daß dabei gelegentlich auf den Bodenplatten 60 verschüttete Flüssigkeiten nicht in den Bereich unter der Bodenplatte 60 eindringen, da sie bei den hydraulischen und elektrischen Systemen des Flugzeugs, die sich im Unterbodenbereich 95 befinden, Probleme verursachen könnten, und zwar vor allem unter den Bordküchen- und Toilettenbereichen des Flugzeugs.

Die Isolierung des Kabinenbereichs 90 vom Unterbodenbereich 95 erfolgt mit dem erfindungsgemäßen Dichtungsmaterial 10. Außerdem kann man das Dichtungsmaterial zusätzlich mit Klebeband (nicht gezeigt) an der Sitzschiene 70 und der Schulter 75 befestigen. Beispiele für derartige Klebebänder wurden vorstehend bereits in Verbindung mit den zur Befestigung der ersten Schicht 20 an der zweiten Schicht 30 verwendeten Klebebändern beschrieben. Als besonders vorteilhaft erwies sich das Band Scotch™ 950 der 3M Corp. Die Klammer 50 weist zwei Löcher auf, durch die die Schraube 80 hindurchgeht. Die Klammer 50 dient dazu, Schraube 80 und Mutter 85 in Position zu halten. Die Ränder der Löcher in der Klammer 50 sind im allgemeinen nach innen gebogen, damit der feste Sitz der Klammer 50 durch die Löcher durch die Schulter 75 gesichert wird. Die Schraube 80 dient dazu, die Bodenplatte 60 in Position zu halten.

Die Klammer 50, wie sie in der Figur gezeigt ist, besteht in der Regel aus einem elastischen Material und besitzt eine Öffnung, die kleiner als die Breite der Schulter 75 ist. Schiebt man die Klammer 50 über die Schulter 75, muß man also die Öffnung der Klammer 50 aufbiegen. Infolgedessen bewegen sich die Kanten der Klammer 50 an der Oberfläche des Dichtungsmaterials 10 entlang. Außerdem sind die Ränder der Löcher in der Klammer 50, durch die die Schraube 80 hindurchgeht, oft scharf. Die scharfen Kanten der Klammer 50 verkratzen die obere Schicht des Dichtungsmaterials 10. Die zweite Schicht 30 des Dichtungsmaterials 10 schützt somit die erste Schicht 20 vor mechanischer Beschädigung durch die beim Überschieben der Klammer über das Dichtungsmaterial 10 und die Schulter 75 entstehende Abriebwirkung.

Die Schraube 80 dient außerdem als Drehpunkt für die Klammer 50. Dreht sich die Klammer 50 um die von der Schraube gebildete Achse derart, daß eine ihrer Kanten in die Oberfläche des Dichtungsmaterials 10 hineinragt, so gewährleistet die zweite Schicht 30, daß im Dichtungsmaterial 10 kein Loch entsteht. Ohne die zweite Schicht 30 könnte die erste Schicht 20 leicht beschädigt werden, und es würden Löcher in der ersten Schicht 20 entstehen. Wie dem Fachmann hinlänglich bekannt und auch in der anhängigen europäischen Patentanmeldung EP96103932.8 beschrieben ist, können solche Löcher, inbesondere wenn sie in der Nähe einer Klammer 50 aus Metall entstehen, zu schweren mechanischen Korrosionsproblemen führen.

## Patentansprüche

1. Dichtungsmaterial (10) aus
einer ersten Schicht (20) und
einer mindestens auf einem Teil der Oberfläche der ersten Schicht (20) befestigten zweiten Schicht (30),
wobei die zweite Schicht (30) aus einem Material besteht, das wesentlich kratzfester ist als die erste Schicht (20).

2. Dichtungsmaterial (10) nach Anspruch 1, wobei
die zweite Schicht (30) eine um mindestens 20% höhere Dichte als die erste Schicht (20) aufweist.

3. Dichtungsmaterial (10) nach Anspruch 1, wobei
die zweite Schicht (30) weniger zusammendrückbar ist als die erste Schicht (20).

4. Dichtungsmaterial (10) nach Anspruch 1, wobei
die erste Schicht (20) mittels eines Klebestreifens (40) an der zweiten Schicht (30) befestigt ist.

5. Dichtungsmaterial (10) nach Anspruch 1, wobei
die erste Schicht (20) aus Polymeren besteht, die aus der Gruppe der Materialien bestehend aus Polytetrafluorethylen (PTFE), Polyurethan und durch Phasentrennverfahren hergestellten Schäumen ausgewählt sind.

6. Dichtungsmaterial (10) nach Anspruch 5, wobei
die erste Schicht (20) aus expandiertem PTFE besteht.

7. Dichtungsmaterial (10) nach Anspruch 1, wobei
die erste Schicht (20) eine Dichte von 0,5 g/cm³ besitzt.

8. Dichtungsmaterial (10) nach Anspruch 1, wobei
die zweite Schicht (30) aus der Gruppe der reißfesten Materialien bestehend aus PTFE, expandiertem PTFE, Kevlar und Polyurethan besteht.

9. Dichtungsmaterial (10) nach Anspruch 8, wobei
die zweite Schicht (30) aus expandiertem PTFE besteht.

10. Dichtungsmaterial (10) nach einem der vorhergehenden Ansprüche zum Herumlegen um die Kante einer Schulter (75).

11. Dichtungsmaterial (10) nach einem der Ansprüche 1 bis 9 zum Herumlegen um eine Schulter (75) derart, daß keine Flüssigkeit durch die Lücke zwischen der Schulter (75) und der Bodenplatte (60) dringen kann.

12. Dichtungsmaterial (10) nach einem der Ansprüche 1 bis 9 zum Abdichten des Passagierraums (90) eines Flugzeugs vom Unterbodenbereich des Flugzeugs (95).
